# EUROPÄISCHE PATENTSCHRIFT

(11) **EP 0 582 107 B1**
(45) Veröffentlichungstag und Bekanntmachung des Hinweises auf die Patenterteilung: **29.11.1995**
(21) Anmeldenummer: 93111186.8
(22) Anmeldetag: 13.07.1993
(51) Int. Cl.: B62D 1/18

(54) **Lenksäule eines Kraftfahrzeugs mit einer Rückzugvorrichtung für den lenkradseitigen Endbereich**
Steering column of a vehicle with a pull back device for the end region of steering-wheel side
Colonne de direction d'un véhicule à moteur avec dispositif de rétractation pour la zone terminale du côté du volant

(30) Priorität: 04.08.1992 DE 4225671
(43) Veröffentlichungstag der Anmeldung: 09.02.1994
(73) Patentinhaber: Bayerische Motoren Werke Aktiengesellschaft, 80788 München (DE)
(72) Erfinder: Mieslinger, Fritz, D-84034 Landshut (DE)

(56) Entgegenhaltungen:
- DE-A- 3 805 869
- DE-A- 3 828 658
- DE-A- 4 005 259

## Beschreibung

Die Erfindung bezieht sich auf eine Lenksäule der im Oberbegriff des Patentanspruch 1 genannten und aus der DE-A-38 28 658 hervorgehenden Art.

Bei der in dieser Druckschrift offenbarten Lenkung besteht das Lenksäulenrohr aus zwei teleskopierbaren Abschnitten, wobei der obere Abschnitt eine Ausnehmung aufweist, in die eine schwenkbar gelagerte und mit einer Steuerschulter versehene Sperrklinke verrastend eingreift, so daß das Lenksäulenrohr in Ruhelage in axialer Richtung festgelegt ist. Im Bereich der Sperrklinke ist der untere Abschnitt des Lenksäulenrohrs von einer sich an einem fahrzeugaufbaufesten Teil abstützenden Druckfeder umgeben, deren gegenüberliegender Endbereich mit Vorspannung gegen eine radial gerichtete Stützschulter des unteren Abschnitts des Lenksäulenrohrs wirkt. Dieser wird bei einem Fahrzeugcrash teleskopartig in den oberen Abschnitt des Lenksäulenrohrs geschoben und gleitet dabei über die Steuerschulter der Sperrklinke, wodurch diese radial nach außen verlagert wird. Durch die Wirkung der sich dabei entspannenden Druckfeder wird der obere Abschnitt des Lenksäulenrohrs zum Armaturenbrett hin verlagert, wobei auch die teleskopierbaren Abschnitte der Lenksäule ineinander geschoben werden. Die Sperrklinke muß jedoch sehr paßgenau hergestellt und eingebaut werden, was arbeitsaufwendig und damit teuer ist.

Ferner geht aus der DE-C-22 46 078 eine weitgehend gleichartig gestaltete Lenkung hervor, bei der der obere Abschnitt des Lenksäulenrohrs von einer sich an seinem unteren Endbereich abstützenden Druckfeder umgeben ist, die mit ihrem gegenüberliegenden Ende am oberen Endbereich des unteren Abschnittes des Lenksäulenrohrs mit Vorspannung anliegt. Dieser ist in seinem Längsmittelbereich mit einem Längsschlitz versehen, in den eine schwenkbar gelagerte Sperrklinke eingreift. Über diese wird der obere Abschnitt des Lenksäulenrohrs in Ruhelage gehalten, während bei einem Fahrzeugcrash eine mit der Sperrklinke zusammenwirkende Einrichtung anspricht, wodurch die Sperrklinke ausgeschwenkt und dadurch der das Lenkrad tragende obere Abschnitt des Lenksäulenrohrs unter Entspannung der Druckfeder vom Fahrer wegverlagert wird. Da sich die Druckfeder im teleskopierbaren Bereich des oberen und unteren Abschnitts des Lenksäulenrohrs befindet, muß der untere Abschnitt des Lenksäulenrohrs einen verhältnismäßig großen Durchmesser aufweisen, weshalb das Lenksäulenrohr entsprechend schwer ist.

Aufgabe der Erfindung ist es daher, die Rückzugvorrichtung einer Lenksäule der im Oberbegriff des Patentanspruchs 1 genannten Art derart auszubilden, daß sie einfach und in kostengünstiger Weise herstellbare Einzelteile aufweist und dabei das Lenksäulenrohr ein vergleichsweise geringes Gewicht hat.

Zur Lösung der Aufgabe sind die im Patentanspruch 1 dargelegten Merkmale vorgesehen.

Nachdem das außerhalb des Lenksäulenrohrs liegende Federelement gemäß den Merkmalen des kennzeichnenden Teils des Patentanspruchs 1 durch ein am Fahrzeugaufbau und am Lenksäulenrohr festgelegtes Spannseil oder dergleichen vorgespannt ist, kann dieses bei einem Fahrzeugcrash in einfacher Weise durch ein aus einem Schneidmesser oder dergleichen bestehendes Trennelement durchgetrennt werden, so daß der obere Endbereich des Lenksäulenrohrs und mit diesem das Lenkrad durch die Wirkung des sich hierbei entspannenden Federelements zur Spritzwand hin - also von Fahrer weg - gezogen und dadurch die Verletzungsgefahr vermindert wird. Dabei kann das Lenksäulenrohr einen vergleichweise kleinen Durchmesser aufweisen.

Bei einem mit einem Airbag ausgerüsteten Fahrzeug kann das Trennelement in einfacher und kostengünstiger Weise durch einen Impuls der zentralen Auslöseelektronik des Airbags aktiviert werden. Falls das Fahrzeug keinen Airbag hat, so wird das Trennelement zweckmäßigerweise durch eine beschleunigungssensitive Einrichtung aktiviert (Merkmale der Patentansprüche 2 und 3).

Am Lenksäulenrohr ist ein Aufnahmeteil vorgesehen, von dem zwei im Abstand voneinander liegende Halteplatten zum Armaturenbrett hin abstehen, wobei von diesem sich ein Z-förmiges Halteteil nach unten erstreckt. An diesem und an einer Halteplatte des Aufnahmeteils liegt eine Druckfeder mit Vorspannung an, die von einem aus Metall oder Kunststoff bestehenden Spannseil durchsetzt ist. Dabei ist zwischen den beiden Halteplatten des Aufnahmeteils das aus einem meißelartigen Schneidmesser und aus einer Gegenplatte bestehende Trennelement vorgesehen, wobei das Schneidmesser zweckmäßigerweise mit einer pyrotechnischen Einrichtung in Verbindung steht (Merkmale der Patentansprüche 4 und 5).

Damit das Lenksäulenrohr bei einem Fahrzeugcrash behinderungsfrei zur Spritzwand hin verlagert werden kann, liegt an dem untenliegenden Schenkel des Z-förmigen Halteteils eine Führungsplatte des Aufnahmeteils und eine mit diesem verbundene Befestigungsplatte des Führungsteils reibschlüssig an (Merkmale des Patentanspruchs 6).

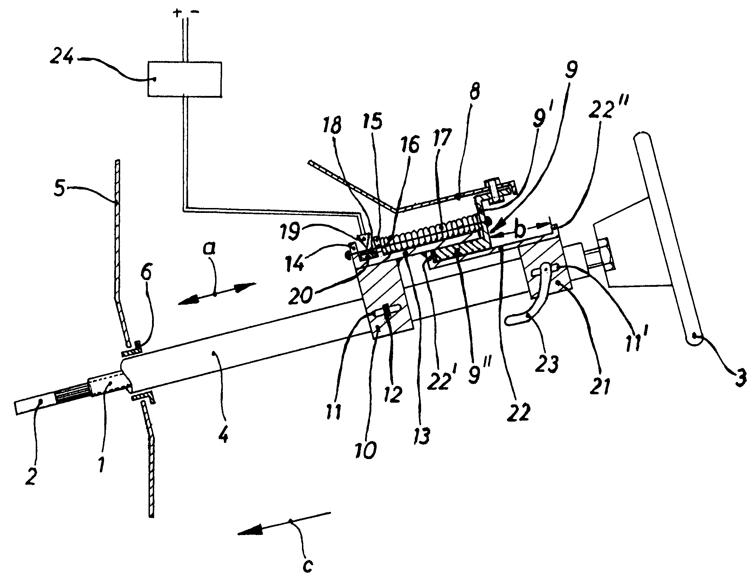

Ein Ausführungsbeispiel der Erfindung ist in der Zeichnung dargestellt und wird im folgenden erläutert. Diese zeigt eine Lenkung eines Personenkraftwagens und ein am Lenksäulenrohr vorgesehenes Aufnahmeteil, das von einer vorgespannten Druckfeder beaufschlagt ist.

Die in der Zeichnung dargestellte Lenkung eines Personenkraftwagens weist einen ersten Lenksäulenabschnitt 1 und einen mit diesem über eine Kerbverzahnung in drehfester, aber längsverschiebbarer Verbindung stehenden, zweiten Lenksäulenabschnitt 2 auf. Dieser steht mit einem nicht dargestellten Lenkgetriebe in drehfester Verbindung, während der erste Lenksäulenabschnitt 1 mit einem Lenkrad 3 drehfest verbunden ist. Dabei ist der erste Lenksäulenabschnitt 1 in einem Lenksäulenrohr 4 drehbar gelagert und steht mit diesem in schubfester Verbindung. Schließlich durchsetzt das Lenksäulenrohr 4 eine Spritzwand 5 und ist in dessen Lager 6 drehbar, jedoch in den Richtungen des Doppelpfeils a längsverschiebbar gelagert.

Ferner befindet sich unterhalb des Armaturenbretts ein fahrzeugaufbaufestes Karosserieblech 8, von dem ein an diesem befestigtes, Z-förmiges Halteteil 9 nach unten absteht. Dieses weist einen Steg 9' und einen untenliegenden, zur Spritzwand 5 hin verlaufenden Abschnitt 9'' auf. Wie in der Zeichnung ersichtlich, ist das Lenksäulenrohr 4 von einem mit einer entsprechenden Durchgangsbohrung versehenen Aufnahmeteil 10 umgeben, das einen parallel zur Rotationsachse des Lenksäulenrohrs 4 verlaufenden Längsschlitz 11 aufweist; in diesen greift ein vom Lenksäulenrohr 4 abstehender Führungsbolzen 12 ein. Ferner ist das Aufnahmeteil 10 mit einer abstandsparallel zum Lenksäulenrohr 4 verlaufenden Führungsplatte 13 versehen, von der zwei, im Abstand voneinander liegende Halteplatten 14 und 15 zum Karosserieblech 8 hin abstehen. Dabei ist die lenkradseitige Halteplatte 15 von einer Durchgangsbohrung 16 durchsetzt. Zwischen dem Steg 9' des Halteteils 9 und der Halteplatte 15 des Aufnahmeteils 10 ist eine Druckfeder 17 angeordnet, die gleichermaßen wie die Durchgangsbohrung 16 der Halteplatte 15 von einem aus Metall oder Kunststoff bestehenden Spannseil 18 durchsetzt ist. Dieses ist am Steg 9' des Halteteils 9 und an der lenkgetriebeseitigen Halteplatte 14 des Aufnahmeteils 10 befestigt und hat eine solche Längserstreckung, daß die Druckfeder 17 in der in der Zeichnung dargestellten Ruhelage des Aufnahmeteils 10 mit Vorspannung gegen dessen Halteplatte 15 wirkt. Schließlich ist zwischen den beiden Halteplatten 14 und 15 des Aufnahmeteils 10 ein von diesem gehaltenes, pyrotechnisches Kraftelement (nicht dargestellt) vorgesehen, das seinerseits ein meißelartiges Schneidmesser 19 enthält, wobei das Kraftelement bei einem Fahrzeugcrash - wie im folgenden erläutert wird - auf einer unmittelbar unterhalb des Spannseils 18 liegenden Gegenplatte 20 aufliegt.

Wie ersichtlich, ist der lenkradseitige Endabschnitt des Lenksäulenrohrs 4 von einem eine entsprechende Durchgangsbohrung aufweisenden Führungsteil 21 umgeben, an dem eine abstandsparallel zum Lenksäulenrohr 4 verlaufende Befestigungsplatte 22 angebracht ist. Diese hat zwei rechtwinklig nach oben abstehende Anschläge 22' und 22'', wobei der Anschlag 22' an der Führungsplatte 13 befestigt ist. In der dargestellten Ruhelage des Lenksäulenrohrs 4 befindet sich dabei der vordere Anschlag 22' im Bereich des freien Endes des untenliegenden Abschnitts 9'' des Halteteils 9, während hierbei der dem Lenkrad 3 zugewandte Anschlag 22'' um ein Maß b vom Steg 9' des Halteteils 9 entfernt ist; das Maß b entspricht etwa dem Verlagerungsweg des Lenksäulenrohrs 4 und damit des Lenkrads 3 bei einem Fahrzeugcrash. Das Führungsteil 21 weist schließlich einen entsprechend der Längserstreckung des Lenksäulenrohrs 4 verlaufenden Längsschlitz 11' auf, der etwa gleich lang ist wie der Längsschlitz 11 im Aufnahmeteil 10. Dabei ist der Längsschlitz 11' von einer in das Lenksäulenrohr 4 eingeschraubten Klemmschraube durchsetzt, die mit einem Schwenkhebel 23 verbunden ist. Bei gelöstem Schwenkhebel 23 kann das Lenksäulenrohr 4 in den Richtungen des Doppelpfeils a entsprechend der Längserstreckung der Längsschlitze 11 und 11' längsverlagert und damit das Lenkrad 3 für den Fahrer individuell eingestellt werden. Hierbei wird der erste Lenksäulenabschnitt 1 mitverlagert, während dabei der zweite, seinerseits mit dem Lenkgetriebe in Verbindung stehende Lenksäulenabschnitt 2 in Ruhelage verbleibt. In Feststelllage des Schwenkhebels 23 - wie dargestellt - ist das Lenksäulenrohr 4 verschiebesicher festgelegt. Sowohl bei gelöstem als auch bei festgelegtem Schwenkhebel 23 liegt die Führungsplatte 13 und die Befestigungsplatte 22 am untenliegenden Abschnitt 9'' des Halteteiles 9 an.

Die Wirkungsweise der erfindungsgemäßen Rückzugvorrichtung ist folgende:
Bei einem Fahrzeugcrash wird ab einem vorgegebenen Verzögerungswert das meißelartige Schneidmesser 19 durch eine im Fahrzeug installierte beschleunigungssensitive Einrichtung oder durch einen elektrischen Impuls der zentralen Auslöseelektronik 24 des Airbags und/oder Gurtstraffers aktiviert, wobei das meißelartige Schneidmesser 19 die Gegenplatte 20 beaufschlagt und dabei das Spannseil 18 durchtrennt. Hierbei entspannt sich die vorgespannte Druckfeder 17 und beaufschlagt die Halteplatte 15 des Aufnahmeteils 10, so daß über dieses das Lenksäulenrohr 4 (durch Eingriff des Führungsbolzens 12 in den Längsschlitz 11), der erste Lenksäulenabschnitt 1 und damit das Lenkrad 3 sowie die Befestigungsplatte 22 und damit das Führungsteil 21 etwa um das Maß b in Pfeilrichtung c - also zum Armaturenbrett und zur Spritzwand 5 hin - verlagert werden. Schließlich liegt der Anschlag 22'' der Befestigungsplatte 22 am Steg 9' des Halteteils 9 an. Beim erwähnten Verlagern des Lenkrads 3 wird das Verletzungsrisiko für den Fahrer erheblich vermindert.

## Patentansprüche

1. Lenksäule eines Kraftfahrzeugs mit einer Rückzugvorrichtung für den lenkradseitigen Endbereich, wobei
- die mit einem Lenkrad (3) versehene Lenksäule in einem seinerseits axial verschiebbaren Lenksäulenrohr (4) drehbar gelagert ist und aus mindestens zwei teleskopierbaren Abschnitten (1 und 2) besteht, während
- an einem fahrzeugaufbaufesten Teil mindestens ein Federelement anliegt, das mit Vorspannung derart gegen das Lenksäulenrohr (4) wirkt, daß ab einem vorgegebenen Verzögerungswert des Fahrzeugs der lenkradseitige Endbereich unter Entspannung des Federelements zum Armaturenbrett hin verlagert wird,
dadurch gekennzeichnet, daß das Federelement durch einen am fahrzeugaufbaufesten Teil und am Lenksäulenrohr (4) festgelegten Verbindungsstrang vorgespannt ist, der bei einem Fahrzeugcrash über ein Trennelement durchgetrennt wird.

2. Lenksäule nach Anspruch 1, dadurch gekennzeichnet, daß das Trennelement durch eine beschleunigungssensitive Einrichtung aktiviert wird.

3. Lenksäule nach Anspruch 1, mit einem durch eine zentrale Auslöseelektronik (24) gesteuerten Airbag, dadurch gekennzeichnet, daß das Trennelement durch einen Impuls der zentralen Auslöseelektronik (24) des Airbags aktiviert wird.

4. Lenksäule nach Anspruch 2 oder 3, wobei gegen das Lenksäulenrohr (4) eine Druckfeder (17) wirkt, dadurch gekennzeichnet, daß
- am Lenksäulenrohr (4) ein Aufnahmeteil (10) vorgesehen ist, von dem zwei im Abstand voneinander liegende Halteplatten (14 und 15) nach oben abstehen, wobei das Lenksäulenrohr (4) relativ zum Aufnahmeteil (10) längsverschiebbar ist,
- von einem im Bereich des Armaturenbretts liegenden Karosserieblech (8) ein Z-förmiges Halteteil (9) nach unten absteht, wobei
- am Steg (9') des Halteteils (9) und an der lenkradseitigen Halteplatte (15) des Aufnahmeteils (10) die Druckfeder (17) mit Vorspannung anliegt, wobei die Druckfeder (17) sowie eine Durchgangsbohrung (16) in der lenkradseitigen Halteplatte (15) von einem am Steg (9') des Halteteils (9) und an der lenkgetriebeseitigen Halteplatte (14) befestigten Spannseil (18) durchsetzt sind, durch das die Druckfeder (17) vorgespannt ist.

5. Lenksäule nach Anspruch 4, dadurch gekennzeichnet, daß zwischen der lenkgetriebeseitigen und der lenkradseitigen Halteplatte (14 und 15) des Aufnahmeteils (10) das aus einem meißelartigen Schneidmesser (19) und einer unterhalb des Spannseils (18) liegenden Gegenplatte (20) bestehende Trennelement vorgesehen ist, wobei das Schneidmesser (19) mit einer pyrotechnischen Einrichtung in Verbindung steht.

6. Lenksäule nach Anspruch 4, dadurch gekennzeichnet, daß das Aufnahmeteil (10) eine parallel zum Lenksäulenrohr (4) verlaufende sowie auf dem untenliegenden Abschnitt (9'') des Z-förmigen Halteteils (9) aufliegende Führungsplatte (13) aufweist und am lenkradseitigen Endbereich des Lenksäulenrohrs (4) an einem dieses umgebenden Führungsteil (21) eine Befestigungsplatte (22) vorgesehen ist, die am untenliegenden Abschnitt (9'') des Halteteils (9) anliegt und über einen etwa rechtwinklig abstehenden Anschlag (22') mit der Führungsplatte (13) verbunden ist.

## Claims

1. A motor-vehicle steering column comprising a pull-back device for the end region of the steering-wheel side, wherein
- the steering column, provided with a steering wheel (3), is rotatably mounted in a steering-column tube (4) which in turn is axially movable and comprises at least two telescopic portions (1 and 2), and
- at least one spring element abuts a part secured to the vehicle body and is prestressed against the steering-column tube (4) so that when the deceleration of the vehicle exceeds a given amount, the spring element relaxes and the end region on the steering-wheel side is moved towards the bulkhead,
characterised in that the spring element is prestressed by a connecting cable which is secured to the part attached to the vehicle body and to the steering-column tube (4) and is cut by a cutting element if the vehicle crashes.

2. A steering column according to claim 1, characterised in that the cutting element is activated by an acceleration-sensitive means.

3. A steering column according to claim 1, with an air bag controlled by a central release electronic unit (24), characterised in that the cutting element is activated by a pulse from the central electronic unit (24) for releasing the air bag.

4. A steering column according to claim 2 or claim 3, wherein a pressure spring (17) acts against the steering-column tube (4), characterised in that
- a retaining part (10) is provided on the steering-column tube (4) and two spaced-apart retaining plates (14 and 15) extend upwards from the retaining part, the steering-column tube (4) being longitudinally movable relative to the retaining part (10),
- a Z-shaped holding part (9) projects downwards from a car-body sheet (8) in the region underneath it, and
- the pressure spring (17) is prestressed against the web (9') of the holding part (9) and against the steering wheel-side retaining plate (15) of the retaining part (10), and a tensioning cable (18) secured to the web (9') of the holding part (9) and to the retaining plate (14) on the steering-mechanism side extends through the pressure spring (17) and through a bore (16) in the retaining plate (15) on the steering-wheel side and prestresses the pressure spring (17).

5. A steering column according to claim 4, characterised in that the cutting element, which comprises a chisel-like knife (19) and a counter-plate (20) disposed under the tensioning cable (18), is disposed between the retaining plate (14) of the retaining part (10) on the steering-mechanism side and the retaining plate (15) on the steering-wheel side, and the knife (19) is connected to a pyrotechnic means.

6. A steering column according to claim 4, characterised in that the retaining part (10) has a guide plate (13) extending parallel to the steering-column tube (4) and resting on the lower portion (9'') of the Z-shaped holding part (9), and a securing plate (22) is provided on a guide part (21) surrounding the steering-wheel side end region of the steering-column tube (4) and abuts the lower portion (9'') of the holding part (9) and is connected to the guide plate (13) via an abutment (22') projecting approximately at right angles.

## Revendications

1. Colonne de direction d'un véhicule à moteur avec un dispositif de rétraction pour la zone terminale, située du côté du volant, dans laquelle :
- la colonne de direction pourvue d'un volant de direction (3) est montée de façon à pouvoir tourner dans un tube de colonne de direction (4), qui de son côté peut coulisser axialement et consiste en au moins deux sections télescopiques (1) et (2), tandis que,
- sur une partie fixée sur le châssis du véhicule repose au moins un élément à ressort, qui agit avec précontrainte contre le tube de la colonne de direction d'une manière telle, qu'à partir d'une valeur prédéterminée de décélération du véhicule, la zone terminale, située du côté du volant de direction, est déplacée en direction du tableau de bord sous l'action de détente de l'élément à ressort,
colonne de direction caractérisée en ce que l'élément à ressort est précontraint par un câble de liaison fixé sur la pièce solidaire du châssis du véhicule et sur le tube de la colonne de direction (4), câble qui est coupé en cas d'accident par un élément de séparation.

2. Colonne de direction selon la revendication 1, caractérisée en ce que l'élément de séparation est actionné par un système sensible aux accélérations.

3. Colonne de direction selon la revendication 1, avec un coussin d'air commandé par un circuit électronique central de déclenchement (24), caractérisé en ce que l'élément de séparation est actionné par une impulsion au circuit électronique central de déclenchement (24) du coussin d'air.

4. Colonne de direction selon la revendication 2 ou 3, dans laquelle un ressort de compression (17) agit contre le tube de la colonne de direction (4), colonne de direction caractérisée en ce que :
- sur le tube de la colonne de direction (4) on prévoit une pièce de réception (10), d'où partent sur le haut deux pièces d'arrêt (14 et 15) se trouvant à une certaine distance l'une de l'autre, le tube de la colonne de direction (4) pouvant coulisser dans le sens de la longueur par rapport à la pièce de réception (10),
- une pièce d'arrêt (9) en forme de Z part vers le bas, à partir d'une tôle de carrosserie (8) qui ses trouve dans la zone du tableau de bord,
- sur la branche (9') de la pièce d'arrêt (9) et sur la plaque d'arrêt (15) qui est située du côté du volant de direction, de la pièce de réception (10) repose le ressort de compression (17) avec précontrainte, le ressort de compression (17) ainsi qu'un perçage de passage (16) dans la plaque d'arrêt (15), qui est située du côté du volant de direction, étant traversés par un câble de tension (18) fixé sur la branche (9') de la pièce d'arrêt (9) et sur la plaque d'arrêt (14) située du côté du boîtier de direction, le câble de tension mettant le ressort de compression (17) en précontrainte.

5. Colonne de direction selon la revendication 4, caractérisée en ce qu'entre les plaques d'arrêt (14 et 15), situées du côté du bottier de direction et du volant de direction, de la pièce de réception (10), on prévoit l'élément de séparation, qui consiste en une lame de coupe (19) ayant la forme d'un burin et en une contre plaque (20), qui se trouve en dessous du câble de tension (18), la lame de coupe (19) étant en liaison avec un système pyrotechnique.

6. Colonne de direction selon la revendication 4, caractérisée en ce que la pièce de réception (10) présente une plaque de guidage (13) qui s'étend en parallèle au tube de la colonne de direction (4) et qui repose en même temps sur la section sous-jacente (9'') de la pièce d'arrêt en forme de Z (9) et l'on prévoit sur la zone terminale du tube de la colonne de direction (4), qui est située du côté du volant de direction une plaque d'arrêt (22) sur une pièce de guidage (21), entourant ce tube, plaque d'arrêt (22) qui repose sur la section sous-jacente (9'') de la pièce d'arrêt (9) et est reliée au moyen d'une butée (22') qui fait saillie à angle droit, à la plaque de guidage (13).
